# EUROPEAN PATENT SPECIFICATION

(11) **EP 3 640 124 B1**
(45) Date of publication and mention of the grant of the patent: **07.07.2021**
(21) Application number: 19203272.0
(22) Date of filing: 15.10.2019
(51) Int. Cl.: B62D 29/04, B62D 33/04, B62D 65/18

(54) **DEVICE FOR STABILIZING HONEYCOMB PANELS OF A BOX SHAPED CARGO COMPARTMENT**
VORRICHTUNG ZUR STABILISIERUNG VON HONEYCOMB-PLATTEN EINES KASTENFÖRMIGEN LADEGERÄTS
DISPOSITIF DE STABILISATION DE PANNEAUX DE NID D'ABEILLES D'UN COMPARTIMENT DE CARGAISON EN FORME DE BOÎTE

(30) Priority: 17.10.2018 SE 1851272
(43) Date of publication of application: 22.04.2020
(73) Proprietor: AB Sjölund Construction, 941 62 Piteå (SE)
(72) Inventor: SJÖLUND, Anders, 941 62 Piteå (SE); FRANZETTI EKEGREN, Petronella, 737 91 Fagersta (SE)
(74) Representative: Zacco Sweden AB

(56) References cited:
- WO-A1-2004/071901
- WO-A1-2008/119965
- DE-A1- 19 822 062

## Description

The present invention relates to a box-shaped cargo compartment for a vehicle, comprising honeycomb panels and a device for stabilising said honeycomb panels, which are mutually joined by means of welds at meeting side edge portions.

In the vehicle industry, especially in manufacturing of so-called vehicle superstructures, which form the cargo compartments of a truck of the so-called van type, it has for long been known to use laminated lightweight construction panels of the sandwich type as car body parts. This type of slice-shaped panels consist of a core of lightweight material, both sides of which (the inside/outside) are covered with a thin panel, which is glued onto the core. Usually, the cargo compartment's side walls, front and rear sections as well as the roof are made of said laminated construction panels, while the floor of the cargo compartment is usually built by means of a basic frame of metal, which is attached in a chassis or vehicle frame constituent in the truck. The floor is clad with a hardwearing material, for example aluminium flooring or plywood plates, on the internal cabinet surface. Due to this type of construction technique, it has been possible to produce cabinets that combine low weight, good heat insulation, large bending and twisting resilience as well as high impact resistance and abrasion strength.

Superstructures of cabinets on a vehicle of the type outlined above are relatively demanding in terms of craftsmanship and require time-consuming work. The construction panels and floor usually meet each other at a number of junction points, which form corners and edges of the cabinet. These junction points usually comprise fittings consisting of aluminium profiles, steel and plastic profiles, rubber lists, screws and rivets. The work of connecting the construction panels at meeting corners and edges requires great accuracy, partly because of the strong forces that occur at the junction points and partly because the junction points must be sealed to avoid ingress of wetness. To avoid cold bridges, especially for so-called thermo cabinets, it is desirable to avoid that metallic materials travel all along the inside and the outside of the cargo compartment at said edge or corner junctions.

Recently, workable FRP fibreglass-reinforced honeycomb panels of weldable thermoplastic material (Fiber Reinforced Thermoplastic Panels) have increasingly been used as construction panels for vehicle superstructures. These panels are made with a core with hollow structure, for example consisting of transverse aluminium honeycomb or reinforced plastic, which on both sides is covered by so-called cover layers usually comprising fibreglass-reinforced thermo plastic.

A considerable advantage of this type of FRP panels is that they can be arranged in various geometric forms. Usually, this is done by an FRP panel being provided with one or a plurality of fold indications along which the panels are bent into the desired geometric form and finally are joined together by the fold indications being sealed by means of welds and addition of a thermoplastic added material. Both welding of the thermoplastics and the manufacture of said FRP panels have been known for long and will therefore not be described in further detail.

Document DE 198 22 062 A1 for example discloses a cargo compartment according to the preamble of claim 1.

One problem of panel structures in manufacture of cargo compartments and cabinets, particularly as regards vehicle-borne cargo compartments, is as efficiently as possible to obtain the required stability between panel structures joined at the corners and edges without using a large number of various complementary connecting means such as for example intermediary bars, outboard fittings, aluminium profiles, steel and plastic profiles, rubber lists, screws and rivets.

An object of the present invention is thus to obtain a box-shaped cargo compartment for a vehicle, comprising honeycomb panels and a device for stabilising said honeycomb panels, which are mutually joined by means of welds at meeting side edge portions.

This object of the invention is resolved by a box-shaped cargo compartment of a vehicle with a stabilising device for honeycomb panels having the features and characteristics stated in claim 1.

In the following, the present invention is described in more detail based on an exemplary embodiment, shown in the accompanying drawing, wherein;
Fig. 1 shows a perspective view of a truck equipped with a cargo compartment or so-called cabinet in which a device for stabilising honeycomb panels of thermoplastic material is included according to the present invention,
Figs 2A and 2B show a respective cutout partial portion of a honeycomb panel of thermoplastic material, which is included in a box-shaped cargo compartment for a vehicle and a device according to the present invention,
Fig. 3 shows a perspective view of a cargo compartment or cabinet in which a device for stabilising honeycomb panels of thermoplastic material is included according to the present invention,
Fig. 4 shows a vertical sectional view seen along line IV-IV in Fig. 3,
Fig. 5 shows a vertical sectional view seen along line V-V in Fig. 3,
Fig. 6 shows a horizontal sectional view seen along line VI-VI in Fig. 3 and further illustrates how a second honeycomb panel with its free side edge portion is fitted against an inside contour of a first honeycomb panel facing the cargo compartment.

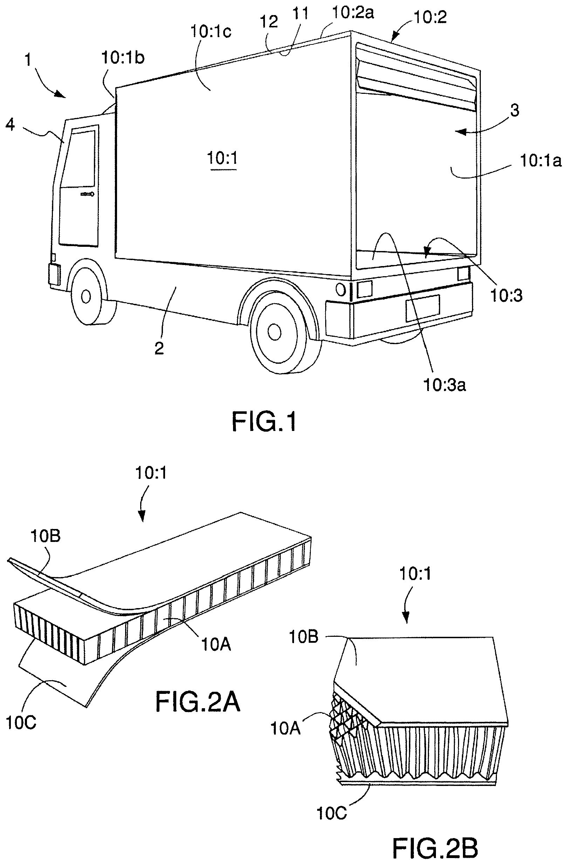

Fig. 1 shows a truck, generally denoted 1, which on a wheeled frame or chassis 2 is equipped with a superstructure that forms a cargo compartment or a so-called cabinet, generally denoted 3. Such cargo compartment 3, which can also be a so-called cooling compartment, is installed behind a driver's cabin 4 on the vehicle chassis. The cargo compartment 3 comprises side walls 10:1a, 10:1c, a front and a rear section 10:1b as well as a roof 10:2 and a floor 10:3. In the rear, the cargo compartment 3 is equipped with a roof sliding door. An interesting feature of this cargo compartment 3 is that the front section 10:1b and both opposing side walls 10:1a, 10:1c are made in one integral piece in a thermoplastic honeycomb panel. The advantages of this embodiment will appear in more detail in the following.

Figs 2A and 2B moreover show, in the form of cutout partial portions, which type of construction panels that the cargo compartment's 3 constraining walls are made of. Specifically, it is here about well-known fibreglass-reinforced honeycomb panels 10 of weldable thermoplastic material, so-called FRP panels (Fiber Reinforced Thermoplastic Panels). To be lightweight, such honeycomb panel 10:1 comprises a core 10A with a hollow structure, of for example transverse aluminium honeycomb or reinforced plastic, which on both sides (inside/outside) is covered by a layer, so-called cover layers 10B, 10C of fibreglass-reinforced weldable thermoplastic.

It should be understood that it has for long been known to arrange thermoplastic honeycomb panels in various types of geometric shapes, i.e. in practice to manufacture bent thermoplastic honeycomb panels. Usually, this is done by the honeycomb panel being provided with one or a plurality of linear fold indications along its main surface, over which the panels are subsequently bent to be joined afterwards by the fold indications being sealed by way of welds and supply of an added material of thermoplastic.

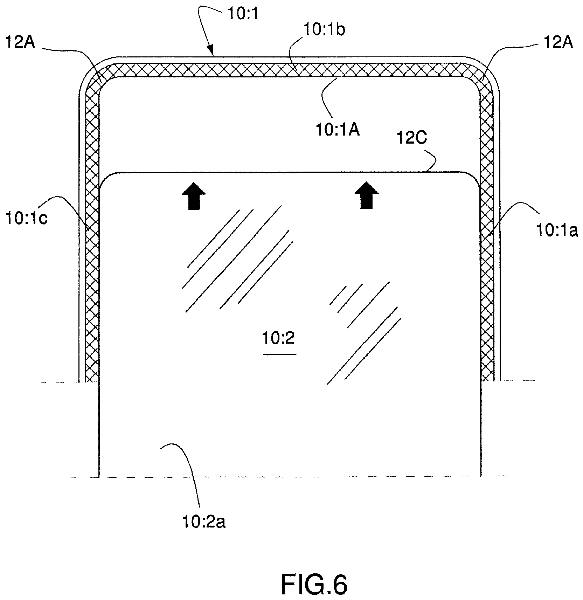

In this manner, based on slice-shaped thermoplastic honeycomb panels, wall elements can be manufactured, which when bent at an angle at suitable partial portions form legs and can have various geometric forms. As an example, a construction element of thermoplastic honeycomb type can be arranged in a U shape or a C shape, wherein at least two of the walls with an intermediate corner of the resulting construction element can be plane-parallel and opposing. Each such formed leg of a honeycomb panel can at least have a first wall 10:1a, a second wall 10:1b and a third wall 10:1c, which are mutually directed in U shape or C shape. Fig. 6 shows an example of such a U-shaped wall.

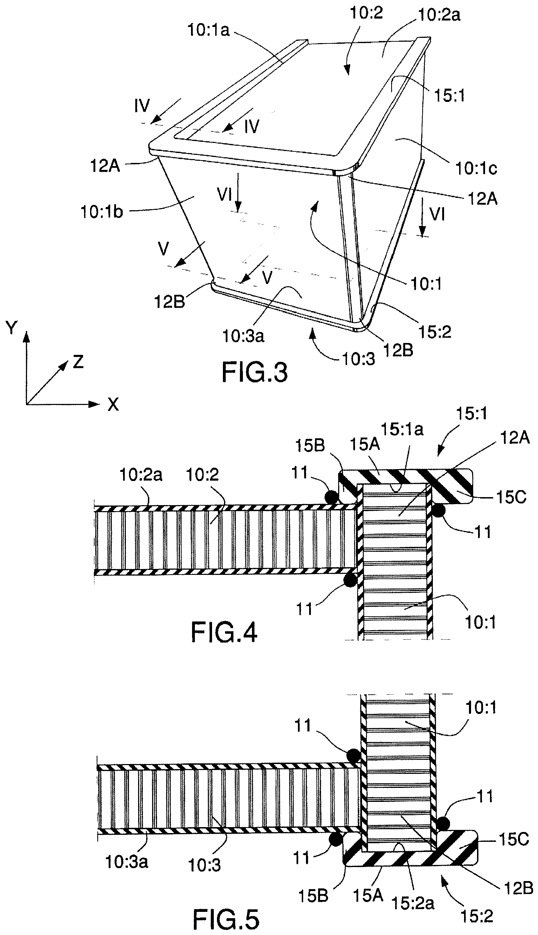

Fig. 3 further shows the box-shaped cargo compartment in Fig. 1, which according to the present invention comprises a device for stabilisation of a plurality of thermoplastic honeycomb panels 10:1, 10:2, 10:3. The various thermoplastic honeycomb panels 10:1, 10:2, 10:3 are arranged to a box-shaped cargo compartment and are mutually joined by means of welds 11 at meeting side edge portion 12.

In an embodiment, the present device thus comprises a first honeycomb panel 10:1, which is integrally formed as a two-legged element, i.e. having two legs directed at an angle against each other, which viewed in a vertical plane form a first wall 10:1a, and a second wall 10:1b. For further understanding, reference is also made to Fig. 6.

Between the two walls 10:1a, 10:1b, there is a defined corner. In an upper respectively lower end, said first and second walls 10:1a, 10:1b have an angled side edge portion 12A, 12B.

In the following, the expression "angled side edge portion" relates to an upper or lower edge portion of a wall, which has an extension (leg) on each side of at least one angle, in a defined corner of the wall. According to the invention, such a corner can be manufactured by a thermoplastic honeycomb panel being arranged in a fold indication along which the panel is bent and joined by the fold indication being bevelled by means of a weld.

As most clearly appears from Fig. 6, both walls 10:1a, 10:1b delimits an inner contour 10:1A facing the cargo compartment, which viewed in a horizontal plane extends along the cargo compartment delimited by said walls.

The device further includes a first moulding, which is generally denoted 15:1 in Figs 3 and 4. Said moulding 15:1 is also manufactured of weldable thermoplastic material.

As shown in Fig. 4, said first moulding 15:1 is arranged with a longitudinal groove 15:1a, which clutches a first angled side edge portion 12A of the first honeycomb panel 10:1.

The device also comprises a second honeycomb panel 10:2, which seen in a horizontal plane has a side edge portion 12C, the outer contour of which corresponds to the inner contour of 10:1A of the first honeycomb panel 10:1, and which second honeycomb panel is fitted against said inner contour to a state, in which it is in contact with said first moulding 15:1. A combination of the first and the second honeycomb panels 10:1, 10:2 as well as the first moulding 15:1 are mutually joined in meeting contact areas by welds 11 for forming a third wall 10:2 of the cargo compartment 3. This third wall 10:2 can form a roof constituent in the cargo compartment 3.

In an alternative further embodiment, the present device further comprises a second moulding 15:2, which is made of weldable thermoplastic material and configured with a longitudinal groove 15:2a, which clutches a second angled side edge portion 12B of the first honeycomb panel 10:1. A third honeycomb panel 10:3, which seen in a horizontal plane has a side edge portion 12D, the outer contour of which corresponds to the inner contour 10:1A of the first honeycomb panel 10:1, and which third honeycomb panel is fitted against said inner contour to a state, in which it is in contact with said second moulding 15:2. A combination of the first and the third honeycomb panels 10:1, 10:2 as well as the second moulding 15:2 are mutually joined in meeting contact areas by welds 11 for forming a fourth wall 10:3 of the cargo compartment 3. This fourth wall 10:3 can form a roof or basic part constituent in the cargo compartment 3.

As appears from Figs 3 and 6, it should be understood that the first honeycomb panel 10:1 comprises an element, which can have three or more legs directed at an angle towards each other, in order to, in addition to said first and second walls 10:1a, 10:1b, form at least a third wall 10:1c. Said first wall 10:1a and third wall 10:1c are thus facing each other, preferably also oriented in plane-parallel and located at a mutual distance from each other, which can correspond to the width of the cargo compartment 3.

As most clearly appears from Figs 4 and 5, the moulding 15:1, 15:2 constituent in the device in the cross section of an essentially flat substantially U-shaped body, comprising a carcass portion 15A, which relative to the middle of the cargo compartment 3, at its end is finalised by an inner 15B respectively outer projecting flange portion 15C. These two flange portions 15B, 15C between them delimit the above-mentioned longitudinal grooves 15:1a, 15:2a for receiving the angled side edge portion 12A, 12B of the first honeycomb panel 10:1.

As appears from Figs 4 and 5, said inner 15B and outer 15C flange portion, respectively, are oriented at the same direction, and said outer flange portion is, viewed in cross section, volume-wise somewhat larger than the inner flange portion to be able to form a durable edge fitting. The substantially plate-shaped moulding 15:1, 15:2 is at the same time decorative and forms an efficient protection against ingress of wetness in the cargo compartment due to the sealing function of the welds 11.

## Claims

1. A box-shaped cargo compartment (3) for a vehicle, which cargo compartment comprises a plurality of honeycomb panels (10:1-10:n) and a device for stabilising said honeycomb panels, wherein said honeycomb panels and the device are mutually joined by means of welds (11) at meeting side edge portions (12), **characterized in that** the device comprises,
- a first honeycomb panel (10:1), which integrally and viewed in a vertical plane is configured as a two-legged element, having two legs directed at an angle against each other in a corner, forming a first side wall (10:1a) and a second side wall (10:1b), and which in an upper respectively a lower end has an angled side edge portion (12A, 12B) and that said walls (10:1a, 10:1b) viewed in a horizontal plane between them delimit an inner contour (10:1A) facing the cargo compartment,
- a first moulding (15:1), which is made of weldable thermoplastic material and configured with a longitudinal groove (15:1a), which clutches a first angled side edge portion (12A) of the first honeycomb panel (10:1),
- a second honeycomb panel (10:2), which viewed in a horizontal plane has a side edge portion (12C), the outer contour of which corresponds to the inner contour of (10:1A) of the first honeycomb panel (10:1), and which second honeycomb panel is fitted against said inner contour to a state, in which it is in contact with said first moulding (15:1), wherein
- a combination of the first and the second honeycomb panels (10:1, 10:2) as well as the first moulding (15:1) are mutually joined in meeting contact areas by welds (11) for forming a roof (10:2a) of the cargo compartment.

2. A box-shaped cargo compartment according to claim 1, wherein the first honeycomb panel (10:1) comprises an element, which has three or more legs directed at an angle towards each other, in order to form, in addition to said first and second side walls (10:1a, 10:1b), at least a third side wall (10:1c).

3. A box-shaped cargo compartment according to claim 2, wherein of the first (10:1a), second (10:1b) and third (10:1c) side walls, which are mutually directed in U shape or C shape, at least two of the side walls (10:1a, 10:1c) are plane-parallel, located at a mutual distance and opposing.

4. A box-shaped cargo compartment according to any one of claims 1-3, wherein the device further comprises,
- a second moulding (15:2), which is made of weldable thermoplastic material and configured with a longitudinal groove (15:2a), which clutches a second angled side edge portion (12B) of the first honeycomb panel (10:1),
- a third honeycomb panel (10:3), which viewed in a horizontal plane has a side edge portion (12D), the outer contour of which corresponds to the inner contour (10:1A) of the first honeycomb panel (10:1), and which third honeycomb panel is fitted against said inner contour to a state, in which it is in contact with said second moulding (15:2), wherein
- a combination of the first and the third honeycomb panels (10:1, 10:2) as well as the second moulding (15:2) are mutually joined in meeting contact areas by welds (11) for forming a floor or a bottom (10:3) of the cargo compartment.

5. A box-shaped cargo compartment according to any one of claims 1-4, wherein each honeycomb panel (10:1, 10:2, 10:3) comprises a core of transverse aluminium honeycomb, which on both sides (inside/outside) is covered by a thin panel, a so-called cover layer of weldable thermoplastic.

6. A box-shaped cargo compartment according to any one of claims 1-5, wherein each moulding (15:1, 15:2) is made of weldable thermoplastic material and configured to integrally clutch said first or second side edge portion (12A, 12B) in an upper or lower end of the first honeycomb panel (10:1).

7. A box-shaped cargo compartment according to any one of claims 1-6, wherein each moulding (15:1, 15:2) in the cross section consists of an essentially flat substantially U-shaped body, comprising a carcass portion (15A), which in respect of the middle of the cargo compartment (3), at its ends is finalised by an inner (15B) and an outer projecting flange portion (15C), respectively, which between them delimit the longitudinal groove (15:1a, 15:2a) for receiving the angled side edge portion (12A, 12B) of the first honeycomb panel (10:1).

8. A box-shaped cargo compartment according to claim 7, wherein said inner (15B) and outer (15C) flange portion, respectively, are oriented at the same direction, and said outer flange portion is, viewed in cross section, volume-wise larger than the inner flange portion to be able to form a durable edge fitting of the cargo compartment.

## Patentansprüche

1. Kastenförmiger Frachtraum (3) für ein Fahrzeug, welcher Frachtraum eine Mehrzahl von Honeycomb-Platten (10:1-10:n) und eine Vorrichtung zur Stabilisierung der Honeycomb-Platten umfasst, wobei die Honeycomb-Platten und die Vorrichtung mittels Schweißungen (11) bei sich treffenden Randabschnitten (12) gegenseitig verbunden sind, **dadurch gekennzeichnet, dass** die Vorrichtung Folgendes umfasst,
- eine erste Honeycomb-Platte (10:1), die integriert und in einer vertikalen Ebene betrachtet als ein zweibeiniges Element ausgebildet ist, mit zwei Beinen, die in einem Winkel gegeneinander in einer Ecke gerichtet sind und eine erste Seitenwand (10:1a) und eine zweite Seitenwand (10:1b) bilden, und welches an einem oberen bzw. unteren Ende einen gewinkelten Seitenrandabschnitt (12A, 12B) aufweist, und dass die Wände (10:1a, 10:1b), wenn in einer horizontalen Ebene betrachtet, zwischen ihnen eine Innenkontur (10:1A) begrenzen, die dem Frachtraum zugewandt ist,
- ein erstes Formteil (15:1), das aus schweißbarem Thermoplastmaterial hergestellt ist und mit einer Längsnut (15:1a) ausgebildet ist, die einen ersten gewinkelten Seitenrandabschnitt (12A) der ersten Honeycomb-Platte (10:1) ergreift,
- eine zweite Honeycomb-Platte (10:2), die, wenn in einer horizontalen Ebene betrachtet, einen Seitenrandabschnitt (12C) aufweist, dessen Außenkontur der Innenkontur (10:1A) der ersten Honeycomb-Platte (10:1) entspricht, und welche zweite Honeycomb-Platte gegen die Innenkontur in einem Zustand montiert ist, in welchem sie sich mit dem ersten Formteil (15:1) in Kontakt befindet, wobei
- eine Kombination der ersten und der zweiten Honeycomb-Platte (10:1, 10:2) sowie das erste Formteil (15:1) durch Schweißungen (11) in Treffpunktbereichen miteinander verbunden sind, um ein Dach (10:2a) des Frachtraums zu bilden.

2. Kastenförmiger Frachtraum nach Anspruch 1, wobei die erste Honeycomb-Platte (10:1) ein Element umfasst, das drei oder mehr Beine aufweist, die in einem Winkel gegeneinander gerichtet sind, um, zusätzlich zur ersten und zweiten Seitenwand (10:1a, 10:1b), mindestens eine dritte Seitenwand (10:1c) zu bilden.

3. Kastenförmiger Frachtraum nach Anspruch 2, wobei aus der ersten (10:1a), zweiten (10:1b) und dritten (10:1c) Seitenwand, die in einer U-Form oder einer C-Form gegenseitig gerichtet sind, mindestens zwei der Seitenwände (10:1a, 10:1c) planparallel und gegenseitig beabstandet und entgegengesetzt angeordnet sind.

4. Kastenförmiger Frachtraum nach einem der Ansprüche 1-3, wobei die Vorrichtung ferner Folgendes umfasst,
- ein zweites Formteil (15:2), das aus schweißbarem Thermoplastmaterial hergestellt ist und mit einer Längsnut (15:2a) ausgebildet ist, die einen zweiten gewinkelten Seitenrandabschnitt (12B) der ersten Honeycomb-Platte (10:1) ergreift,
- eine dritte Honeycomb-Platte (10:3), die, wenn in einer horizontalen Ebene betrachtet, einen Seitenrandabschnitt (12D) aufweist, dessen Außenkontur der Innenkontur (10:1A) der ersten Honeycomb-Platte (10:1) entspricht, und welche dritte Honeycomb-Platte gegen die Innenkontur in einem Zustand montiert ist, in welchem sie sich mit dem zweiten Formteil (15:2) in Kontakt befindet, wobei
- eine Kombination der ersten und der dritten Honeycomb-Platte (10:1, 10:2) sowie das zweite Formteil (15:2) durch Schweißungen (11) in Treffpunktbereichen miteinander verbunden sind, um ein Dach oder einen Boden (10:3) des Frachtraums zu bilden.

5. Kastenförmiger Frachtraum nach einem der Ansprüche 1-4, wobei jede Honeycomb-Platte (10:1, 10:2, 10:3) einen Kern aus querlaufendem Aluminium-Honeycomb umfasst, welche auf beiden Seiten (innen/außen) von einer dünnen Platte, einer sogenannten Deckschicht aus schweißbarem Thermoplast, abgedeckt ist.

6. Kastenförmiger Frachtraum nach einem der Ansprüche 1-5, wobei jedes Formteil (15:1, 15:2) aus schweißbarem Thermoplastmaterial hergestellt ist und dazu ausgebildet ist, den ersten oder den zweiten Seitenrandabschnitt (12A, 12B) in einem oberen oder unteren Ende der ersten Honeycomb-Platte (10:1) integriert zu ergreifen.

7. Kastenförmiger Frachtraum nach einem der Ansprüche 1-6, wobei jedes Formteil (15:1, 15:2) im Querschnitt aus einem im Wesentlichen flachen, im Wesentlichen U-förmigen Körper besteht, umfassend einen Karkassenabschnitt (15A), der bezüglich der Mitte des Frachtraums (3), an seinen Enden, durch einen inneren (15B) bzw. einen äußeren vorspringenden Flanschabschnitt (15C) abgeschlossen ist, welche zwischen ihnen die Längsnut (15:1a, 15:2a) zur Aufnahme des gewinkelten Seitenrandabschnitts (12A, 12B) der ersten Honeycomb-Platte (10:1) begrenzen.

8. Kastenförmiger Frachtraum nach Anspruch 7, wobei der innere (15B) bzw. der äußere (15C) Flanschabschnitt in derselben Richtung ausgerichtet sind, und der äußere Flanschabschnitt, wenn im Querschnitt betrachtet, volumenmäßig größer als der innere Flanschabschnitt ist, um eine dauerhafte Randmontage des Frachtraums bilden zu können.

## Revendications

1. Compartiment de cargaison en forme de boîte (3) pour un véhicule, ledit compartiment de cargaison comprenant une pluralité de panneaux en nid d'abeille (10:1-10:n) et un dispositif pour stabiliser lesdits panneaux en nid d'abeille, dans lequel lesdits panneaux en nid d'abeille et le dispositif sont mutuellement joints au moyen de soudures (11) au niveau des parties de bord latérales de réunion (12), **caractérisé en ce que** le dispositif comprend,
- un premier panneau en nid d'abeille (10:1) qui, intégralement et vu dans un plan vertical, est configuré comme un élément à deux pieds, ayant deux pieds dirigés à un angle l'un contre l'autre dans un coin, formant une première paroi latérale (10:1a) et une deuxième paroi latérale (10:1b), et qui, dans une extrémité supérieure respectivement une extrémité inférieure, présente une partie de bord latérale inclinée (12A, 12B), et que lesdites parois (10:1a, 10:1b) vues dans un plan horizontal entre elles délimitent un contour intérieur (10:1A) en face du compartiment de cargaison,
- un premier moulage (15:1) qui est fait d'un matériau thermoplastique soudable et configuré avec une rainure longitudinale (15:1a) qui embraye une première partie de bord latérale inclinée (12A) du premier panneau en nid d'abeille (10:1),
- un deuxième panneau en nid d'abeille (10:2) qui, vu dans un plan horizontal, présente une partie de bord latérale (12C) dont le contour extérieur correspond au contour intérieur (10:1A) du premier panneau en nid d'abeille (10:1), et ledit deuxième panneau en nid d'abeilles est ajusté contre ledit contour intérieur jusqu'à un état dans lequel il est en contact avec ledit premier moulage (15:1), dans lequel
- une combinaison des premier et deuxième panneaux en nid d'abeille (10:1, 10:2) ainsi que le premier moulage (15:1) sont mutuellement joints dans des zones de contact de réunion par des soudures (11) pour former un toit (10:2a) du compartiment de cargaison.

2. Compartiment de cargaison en forme de boîte selon la revendication 1, dans lequel le premier panneau en nid d'abeilles (10:1) comprend un élément avec trois ou plusieurs pieds dirigés à un angle l'un vers l'autre afin de former, en plus desdits première et deuxième parois latérales (10:1a, 10:1b), au moins une troisième paroi latérale (10:1c).

3. Compartiment de cargaison en forme de boîte selon la revendication 2, dans lequel parmi les première (10:1a), deuxième (10:1b) et troisième (10:1c) parois latérales, qui sont mutuellement dirigées en forme de U ou en forme de C, au moins deux des parois latérales (10:1a, 10:1c) sont plan-parallèles, situées à distance mutuelle et opposées l'une à l'autre.

4. Compartiment de cargaison en forme de boîte selon l'une quelconque des revendications 1 à 3, dans lequel le dispositif comprend en outre,
- un deuxième moulage (15:2) qui est fait d'un matériau thermoplastique soudable et configuré avec une rainure longitudinale (15:2a) qui embraye une deuxième partie de bord latérale inclinée (12B) du premier panneau en nid d'abeille (10:1),
- un troisième panneau en nid d'abeille (10:3) qui, vu dans un plan horizontal, présente une partie de bord latérale (12D) dont le contour extérieur correspond au contour intérieur (10:1A) du premier panneau en nid d'abeille (10:1), et ledit troisième panneau en nid d'abeilles est ajusté contre ledit contour intérieur jusqu'à un état dans lequel il est en contact avec ledit deuxième moulage (15:2), dans lequel
- une combinaison des premier et troisième panneaux en nid d'abeille (10:1, 10:2) ainsi que le deuxième moulage (15:2) sont mutuellement joints dans des zones de contact de réunion par des soudures (11) pour former un plancher ou un fond (10:3) du compartiment de cargaison.

5. Compartiment de cargaison en forme de boîte selon l'une quelconque des revendications 1 à 4, dans lequel chaque panneau en nid d'abeilles (10:1, 10:2, 10:3) comprend un noyau en nid d'abeille en aluminium transversal qui, des deux côtés (intérieur / extérieur), est recouvert d'un panneau mince, une dite couche de recouvrement en thermoplastique soudable.

6. Compartiment de cargaison en forme de boîte selon l'une quelconque des revendications 1 à 5, dans lequel chaque moulure (15:1, 15:2) est faite d'un matériau thermoplastique soudable et configurée pour embrayer intégralement lesdites première ou deuxième partie de bord latérales (12A, 12B) dans une extrémité supérieure ou inférieure du premier panneau en nid d'abeille (10:1).

7. Compartiment de cargaison en forme de boîte selon l'une quelconque des revendications 1 à 6, dans lequel chaque moulage (15:1, 15:2) dans la section transversale consiste en un corps essentiellement plat sensiblement en forme de U, comprenant une partie de carcasse (15A) qui, par rapport au milieu du compartiment de cargaison (3), à ses extrémités, est finalisée par une partie de rebord en saillie respectivement intérieure (15B) et extérieure (15C) qui délimitent entre elles la rainure longitudinale (15:1a, 15:2a) pour recevoir la partie de bord latéral inclinée (12A, 12B) du premier panneau en nid d'abeille (10:1).

8. Compartiment de cargaison en forme de boîte selon la revendication 7, dans lequel lesdites parties de bride respectivement intérieure (15B) et extérieure (15C) sont orientées à la même direction, et ladite partie de bride extérieure est, vue en coupe transversale, supérieure en volume à la partie de bride intérieure pour pouvoir former un ajustement de bord durable du compartiment de cargaison.
